Europäisches Patentamt

European Patent Office

Office européen des brevets

(19)

(11) Veröffentlichungsnummer: **0 308 878 B1**

## (12) EUROPÄISCHE PATENTSCHRIFT

(45) Veröffentlichungstag der Patentschrift:
10.07.91 Patentblatt 91/28

(51) Int. Cl.⁵: **F16K 31/08**

(21) Anmeldenummer: **88115434.8**

(22) Anmeldetag: **21.09.88**

(54) **Absperrorgan für Gase oder Flüssigkeiten.**

(30) Priorität: **24.09.87 DE 8712878 U**

(43) Veröffentlichungstag der Anmeldung:
**29.03.89 Patentblatt 89/13**

(45) Bekanntmachung des Hinweises auf die
Patenterteilung:
**10.07.91 Patentblatt 91/28**

(84) Benannte Vertragsstaaten:
**AT BE CH DE FR GB IT LI LU NL SE**

(56) Entgegenhaltungen:
**DD-A- 231 613**
**DE-A- 3 014 692**

(73) Patentinhaber: **Franz Klaus Union Armaturen**
**Pumpen GmbH & Co.**
**Blumenfeldstrasse 18**
**W-4630 Bochum 1 (DE)**

(72) Erfinder: **Klaus, Franz, Dipl.-Ing.**
**Dürerstrasse 12**
**W-4630 Bochum 1 (DE)**
Erfinder: **Hemmer, Wolfgang, Dipl.-Ing.**
**Böcklinweg 18**
**W-4630 Bochum 6 (DE)**

(74) Vertreter: **Patentanwälte Wenzel & Kalkoff**
**Flasskuhle 6 Postfach 2448**
**W-5810 Witten (DE)**

## Beschreibung

Die Erfindung betrifft ein Absperrorgan für Gase oder Flüssigkeiten, mit einer den Verschlußkörper tragenden Spindel oder Stellwelle, deren axiale Verstellung mit Hilfe einer antreibbaren Mutter bzw. deren Verdrehung zur Schließstellung oder Öffnungsstellung des Verschlußkörpers führt, bei dem die Mutter bzw. die Stellwelle direkt mit einem Innenrotor verbunden ist, um dessen äußere Zylinderfläche Permanentmagnete mit wechselnder Polung angebracht sind, ein an dem Gehäuse befestigter Spalttopf den Innenrotor glockenförmig umgibt und ein zylindrischer, in dem Gehäuse gelagerter Treiber den Spalttopf übergreift, der auf seiner zylindrischen Innenfläche mit Permanentmagneten in der gleichen Anzahl besetzt ist wie der Innenrotor, jedoch mit entgegengesetzter Polung.

Derartige Absperrorgane werden in unterschiedlichen Bauformen hergestellt und dienen zum Schließen von Rohrleitungen, Ausflüssen, Zuflüssen an Behältern und auch ggfs. zur Dosierung einer Gas- oder Flüssigkeitsmenge. Die gebräuchlichste Bauform sind das Ventil, der Schieber und der Hahn, wobei innerhalb jeder Bauform wiederum verschiedene Typen unterschieden werden, deren Auswahl sich in der Regel nach dem Verwendungszweck richtet. Allen Absperrorganen ist gemeinsam, daß eine Spindel oder eine Verstellwelle bewegt werden muß, um die Absperr- bzw. Dosierwirkung herbeizuführen.

Ein Absperrorgan der eingangs vorgestellten Gattung ist z.B. aus der DDR-Patentschrift 231 613 bekannt. Die Kraft zur Verdrehung der Stellspindel wird mit Hilfe von Dauermagneten durch einen feststehenden Spalttopf hindurch übertragen. Da dieses Absperrorgan als Sanitärarmatur gedacht ist, kommt es nicht darauf an, ob die ursprünglich vorgesehene Winkelstellung zwischen dem äußeren Betätigungsorgan und der inneren Spindel erhalten bleibt oder nicht, ob also beispielsweise bei einem sehr festen Schließen des Absperrorganes die Magnetkupplung überspringt. Vielmehr kommt es darauf an, daß die Absperrwirkung jeweils nach Wunsch erzielt werden kann, was sehr leicht durch Inaugenscheinnahme von noch austretendem Wasser kontrolliert werden kann. Darüber hinaus ist ein Absperrorgan ähnlicher Gattung aus der Deutschen Offenlegungsschrift 30 14 692 bekannt, bei dem jedoch das Betätigungsorgan verlierbar ist, also ausschließlich durch die Magnetkräfte auf dem Spalttopf gehalten wird. Bei diesem Absperrorgan besteht eine noch größere Gefahr, daß eine ursprüngliche Zuordnung zwischen dem Betätigungsorgan und der Spindel im Laufe des Betriebes nicht beibehalten wird.

Sowohl die Spindel als auch die Welle bei Ventilen, Schiebern oder Hähnen werden in der Regel bis zu einem Anschlag verstellt, und in den jeweiligen Endpositionen kann die Bedienungsperson davon ausgehen, daß das Absperrorgan vollständig geöffnet bzw. vollständig geschlossen ist. Durch die Einbeziehung einer Permanentmagnetkupplung in dem Antrieb geht diese Gewißheit verloren. Es ist deshalb Aufgabe der Erfindung, ein Absperrorgan der eingangs genannten Art so zu verbessern, daß die Stellung der Spindel bzw. der Stellwelle auch bei Einbeziehung einer Permanentmagnetkupplung kontrollierbar ist.

Zur Lösung dieser Aufgabe schlägt die Erfindung vor, daß außen an dem Gehäuse im Bereich der Spindel bzw. der Stellwelle ein drehbar gelagerter Anzeigemagnet angebracht ist, und daß an der Spindel bzw. an der Stellwelle ein Arbeitsmagnet fest angebracht ist, der infolge der Spindel- bzw. der Stellwellenbewegung geradlinig oder auf einer Kreisbahn relativ zu dem Anzeigemagneten bewegbar ist.

Der sich geradlinig oder auf einer Kreisbahn bewegende Arbeitsmagnet führt zu einer Auslenkung des schwenkbar gelagerten Anzeigemagneten, so daß die Ist-Stellung des über die Permanentmagnetkupplung angetriebenen Teiles, das auch den Verschlußkörper trägt, außen am Gehäuse abgelesen werden kann. Bei richtiger Auslegung und Anordnung genügt die Genauigkeit einer derartigen Anzeige.

Vorzugsweise wird der Anzeigemagnet in einer drehbar gelagerten Trommel untergebracht, die ihrerseits in einem geschlossenen, mit einem Sichtfenster versehenen kleinen Anzeigegehäuse eingekapselt ist. Das Anzeigegehäuse sitzt in der Regel seitlich an dem Absperrorgan, so daß eine ausreichende Einsichtmöglichkeit vorhanden ist. Ggfs. muß ein Spiegel oder dgl. angebracht werden.

Die Anzeigevorrichtung mit Hilfe des Arbeitsmagneten und des Anzeigemagneten kann sowohl für einen sich auf einer Kreisbahn bewegenden Arbeitsmagneten als auch für einen sich linear bewegenden Arbeitsmagneten ausgerichtet sein. Im ersten Fall wird er einer Welle beispielsweise für einen Kugelhahn zugeordnet, im zweiten Fall ist er an einer Spindel befestigt, die sich ohne Drehung bei der Verstellung axial bewegt. Anhand der nachfolgend noch genauer erläuterten Ausführungsbeispiele wird diese Abstimmung noch genauer erklärt.

Es ist unerheblich, ob der Treiber mit einem Handrad bzw. mit einem Handhebel, einem Elektromotor oder einem Umschaltgetriebe verbunden ist, mit dessen Hilfe wahlweise ein Handrad oder ein Elektromotor als Antriebswelle eingesetzt werden kann. In jedem Fall arbeitet die Kraftübertragung mit Hilfe der durch den Spalttopf hindurchwirkenden Permanentmagnete in bekannter Weise verschleiß- und ermüdungsfrei. Die Anzeige ist also sowohl für die Drehung der einer Spindel zugeordneten Mutter kontrollierbar als auch bei einem Kugelhahn, dessen Welle direkt mit Hilfe des Permanentmagnetantriebes in Drehung versetzt wird, und zwar um einen wesentlich geringeren Betrag, nämlich in der Regel um ca. 90°.

Bei einer Integration des Absperrorganes in ein Hochdrucksystem bietet der Spalttopf als zylindrisches Gebilde mit einem sehr kräftigen Bund an der einen Seite und einem geschlossenen Boden an der anderen Seite erhebliche Vorteile bzgl. der Formstabilität. Bei extremen Systemdrücken kann der Spalttopf aus Kunststoff mit einer Armierung aus Kohlefasern oder Aramidfasern hergestellt sein, oder er wird noch weiter versteift, was dadurch geschieht, daß er stufenförmig mit mindestens zwei zylindrischen Abschnitten unterschiedlichen Durchmessers ausgebildet wird.

Die stufenförmige Ausbildung sorgt im Bereich der Stufe für eine Verstärkung nach Art eines Faßreifens, die die Formstabilität und damit die Unempfindlichkeit gegenüber einer Druckverformung stark anhebt. Diese Wirkung kann durch aufgeschobene oder integrierte Ringe im Bereich der Stufe noch verstärkt werden. In den zylindrischen Abschnitten, die relativ schmal gewählt werden können – an praktischen Ausführungsbeispielen genügt eine axiale Länge von z.B. 1,2 cm – steht genügend Raum zur Verfügung, um Permanentmagnete in ausreichender Anzahl und Stärke unterzubringen. Ggfs. werden mehrere Kränze von sich gegenüberliegenden Permanentmagneten in mehreren zylindrischen Abschnitten eingesetzt, um die erforderliche Drehkraft zur Verstellung der Spindel bzw. der Stellwelle herbeizuführen.

Bei Absperrorganen, deren Verschluß mit Hilfe einer Spindel bewegt werden, können sich insbesondere nach längeren Stillstandszeiten an der Gewindespindel Ablagerungen bilden, die dann später bei einer Verstellung die Leichtgängigkeit zwischen Spindel und Mutter beeinträchtigen. In einer Weiterbildung der Erfindung ist deshalb vorgesehen, daß die die Spindel antreibende Mutter zumindest auf der einen Seite eine Schälkante zur Reinigung der Spindel aufweist. Die Schälkante kann z.B. durch einen segmentförmigen Ausschnitt des Innengewindes gebildet sein. Es ist besonders zweckmäßig, mindestens zwei Gewindegänge zur Bildung von zwei Schälkanten heranzuziehen, wodurch eine noch bessere Schälwirkung erzielt wird.

Die Entscheidung darüber, ob lediglich an der einen Seite der Mutter oder an beiden Seiten mindestens eine Schälkante eingesetzt wird, richtet sich nach dem Verwendungszweck und nach der voraussichtlich längsten Dauer im Öffnungszustand bzw. im Schließzustand. Wenn bereits vorher bekannt ist, daß sehr lange Perioden in der einen Stellung nach kurzen Schließ- oder Öffnungsperioden zu erwarten sind, genügt eine Schälkante an der einen Seite der Mutter, weil für den Rücklauf nicht genügend Zeit für Ablagerungen zur Verfügung steht. Bei unbekanntem Verwendungszweck bzw. bei wechselndem Einsatz sollte an beiden Seiten der Mutter mindestens eine Schälkante vorgesehen werden.

Nachfolgend werden Ausführungsbeispiele der Erfindung, die in der Zeichnung dargestellt sind, näher erläutert ; in der Zeichnung zeigen :

Fig. 1    eine Querschnittsansicht eines Absperrschiebers mit einer Betätigungseinrichtung gemäß der Erfindung,

Fig. 2    eine Querschnittsansicht als Ausschnitt gemäß der Figur 1 mit einem abgewandelten Antrieb,

Fig. 3    eine Querschnittsansicht eines Absperrorgans gemäß der Erfindung mit einem stufenförmig ausgebildeten Spalttopf,

Fig. 4    eine Querschnittsansicht eines Kugelhahnes mit einer Betätigungseinrichtung gemäß der Erfindung,

Fig. 5    eine Querschnittsansicht durch eine Anzeigevorrichtung zum Anzeigen der Stellung einer Spindel oder einer Welle,

Fig. 6    eine weitere Querschnittsansicht durch die Anzeigevorrichtung in einer anderen Ebene in Verbindung mit einem auf einer Kreisbahn bewegten Arbeitsmagneten,

Fig. 7    eine Ansicht gemäß der Figur 6 in Verbindung mit einem geradlinig bewegten Arbeitsmagneten,

Fig. 8    eine Querschnittsansicht als Ausschnitt durch eine Mutter mit einer Schälkante zur Reinigung einer Spindel entlang der Linie VIII-VIII der Figur 9 und

Fig. 9    eine Querschnittsansicht durch die Mutter gemäß der Figur 8.

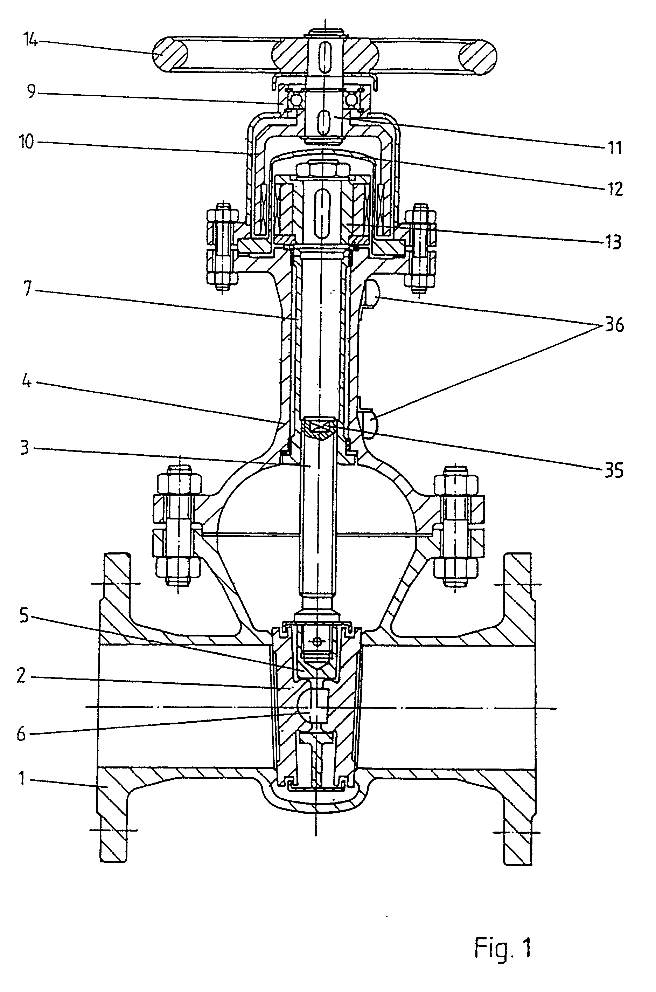

In der Figur 1 ist ein Absperrschieber wiedergegeben, der beispielsweise zum Öffnen und Schließen einer Rohrleitung eingesetzt wird. Innerhalb eines mit Anschlußflanschen versehenen Gehäuses 1 befindet sich eine keilartige Dichtplatte 2, die mit Hilfe einer Spindel 3 aus dem Rohrbereich des Gehäuses 1 herausgezogen oder, wie dargestellt, zur Absperrung in diesen Bereich eingesenkt werden kann. Zur Aufnahme der Dichtplatte 2 in geöffnetem Zustand des Absperrorganes ist das Gehäuse 1 mit einer Haube 4 versehen, an die sich noch ein Aufsatz 8 anschließt. In üblicher Weise wirkt die Spindel 3 über einen Plattenhalter 5 und eine Kugel 6 auf die Dichtplatte 2.

Innerhalb des Aufsatzes 8 ist eine Gewindebuchse 7 drehbar. gelagert und in axialer Richtung gesichert. An ihrem unteren Ende ist sie mutternartig ausgebildet, wobei der Mutternbereich das obere Ende der Spindel 3 umschließt. Durch Verdrehen der Gewindehülse 7 kommt es zu einer Axialbewegung der Spindel 3, die für die Verstellung des Absperrorgans ausgenutzt wird.

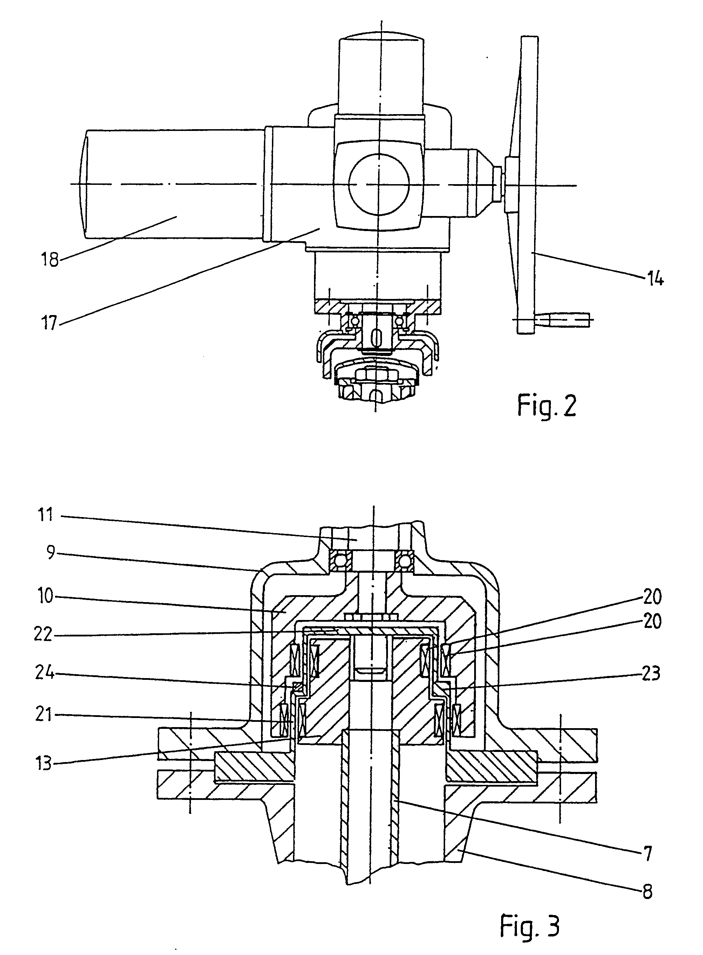

Am oberen Ende der Gewindehülse ist ein Innenrotor 13 befestigt, der auf seiner Außenseite zwei Kränze von Permanentmagneten (20) (Fig. 3) trägt. Der Innenrotor 13 wird von einem Spalttopf 12 aus austhenitischem Stahl oder aus Kunststoff mit Einlagen aus Kohlefasern oder Aramidfasern glockenförmig abgedeckt, wobei ein Bund an der offenen Seite des Spalttopfes 12 gleichzeitig als Dichtung zwischen der Verlängerung 8 und einem Kupplungsgehäuse 9 Verwendung findet.

Das Kupplungsgehäuse 9 schließt einen hohlzylindrischen Treiber 10 ein, der mit Hilfe einer Welle 11 drehbar in dem Kupplungsgehäuse 9 gelagert ist. Auf der zylindrischen Innenfläche des Treibers 10 befinden sich Permanentmagnete derselben Anzahl und mit entgegengesetzter Polung im Vergleich zu den Permanentmagneten an dem Innenrotor 13. Auf diese Weise wird eine berührungsfreie Kupplung gebildet, so daß eine Drehbewegung des Treibers 10 sich auf den Innenrotor 13 überträgt.

Bei dem in Figur 1 wiedergegebenen Ausführungsbeispiel wird die Drehbewegung mit Hilfe eines Handrades 14 hervorgerufen, so daß zu herkömmlichen Schiebern derselben Bauart rein äußerlich kaum Unterschiede bestehen. Statt des Handrades 14 kann auch ein Umschaltgetriebe 17 (Fig. 2) eingesetzt werden, das die Möglichkeit eröffnet, die Gewindehülse 8 über die genannten Bauteile entweder mit Hilfe eines Handrades 14 oder mit Hilfe eines Elektromotors zu verfahren.

Die Permanentmagnete an dem Innenrotor 13 und an dem Treiber 10 werden in jedem Fall so gewählt, daß die in der Regel höhere Kraft zum Öffnen des Absperrorgans gegenüber der Schließkraft von der durch die Permanentmagnete 20 gebildeten Kupplung aufgebracht wird. Es stehen besonders wirkungsvolle Permanentmagnete beispielsweise aus Legierungen von Kobalt und seltenen Erden zur Verfügung, die eine wirtschaftliche Auslegung ermöglichen.

In der Figur 3 ist ein weiteres Ausführungsbeispiel für die Ausgestaltung der Permanentmagnetkupplung wiedergegeben, das für besonders hohe Systemdrücke geeignet ist. Der Spalttopf 21 ist stufig ausgebildet, wobei in der linken Bildhälfte eine relativ steile Stufe mit einem aufgeschobenen Ring 24 und in der rechten Bildhälfte ein integrierter Ring 23 wiedergegeben ist ; beide Ringe kommen selbstverständlich nicht zur selben Zeit innerhalb der Ebene zur Anwendung, sondern sind im vorliegenden Fall lediglich zur Demonstration der Gestaltungsmöglichkeit wiedergegeben worden. Zu beiden Seiten der Stufe sind sowohl auf dem Innenrotor 13 als auch an dem Treiber 10 Permanentmagnete 20 angeordnet, so daß insgesamt zwei als Kupplung wirkende Magnetkranzeinheiten vorhanden sind. Es ist deutlich zu erkennen, daß durch die Stufe die Montagemöglichkeit erhalten bleibt, da der Innenrotor ohne Schwierigkeit in den abgestuften Spalttopf eingeschoben und der Treiber 13 über den Spalttopf 21 gestülpt werden kann.

Zur Führung der Gewindebuchse 7 ist an dem Spalttopfboden 22 noch ein Zapfen angebracht, der ein Führungslager bildet.

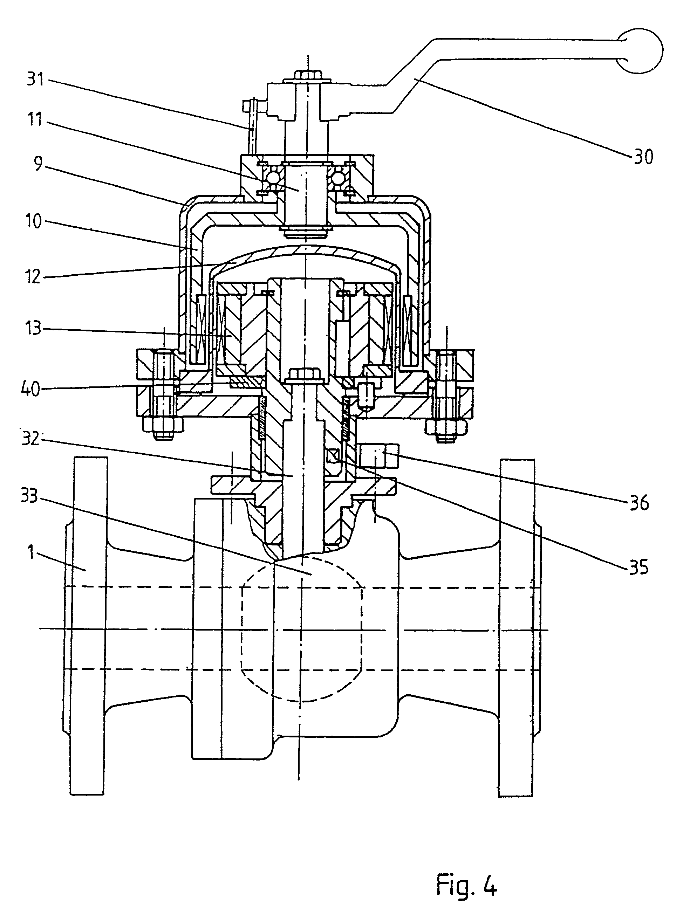

In der Figur 4 ist ein Ausführungsbeispiel wiedergegeben, bei dem die Permanentmagnetkupplung, die im wesentlichen aus dem Treiber 10, dem Spalttopf 12 und dem Innenrotor 13 besteht, für die Betätigung einer Sperrkugel 33 über eine Stellwelle 32 ausgenutzt wird. Der Treiber 10 wird mit Hilfe einer Welle 11 über einen Handhebel 30 betätigt, der mit Hilfe eines Anschlages 31 um im wesentlichen 90° verschwenkt werden kann. Auch die Drehbewegung des Innenrotors 13 ist mit Hilfe eines Stiftes 34 auf diesen Betrag begrenzt, und zwar durch eine mit dem Innenrotor 13 verbundene, in einem Winkelbereich von etwas mehr als 90° ausgeschnittene Platte 40.

Bei den vorangehend vorgestellten Ausführungsbeispielen kann es vorkommen, daß die Permanentmagnetkupplung infolge einer Schwergängigkeit der Spindel 3 (Fig. 1) bzw. der Verstellwelle 32 (Fig. 4) "außer Tritt" gerät, also die ursprüngliche Gegenüberstellung des Treibers 10 und des Innenrotors 13 verloren geht. Während bei einem Spindelantrieb durch einfaches Weiterfahren bzw. Weiterdrehen des Betätigungsorgans dieser Defekt ausgeglichen werden kann, bedeutet er bei einem Kugelhahn z.B. gemäß der Figur 4, daß die Öffnungsstellung oder die Schließstellung nicht vollständig erreicht wird, da der Schwenkwinkel des Handhebels 30 begrenzt ist. Dies gilt im übrigen auch bei Spindelantrieben, die mit Schrittmotoren oder dergleichen bewegt werden, denen nur ein beschränkter Schwenkweg zur Verfügung steht.

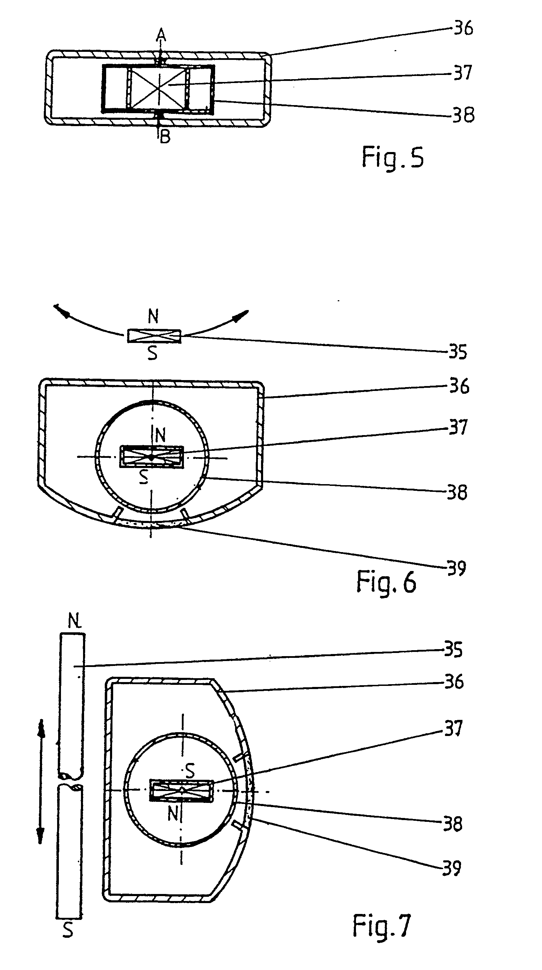

Bei dem Ausführungsbeispiel gemäß der Figur 1 ist deshalb an der Einschraubstelle der Spindel 3 in den Plattenhalter 5 ein Arbeitsmagnet 35 angebracht, dessen Polachse parallel zur Mittelachse der Spindel 3 verläuft. Auf der Außenseite des Gehäuses 1 befindet sich ein Anzeigegehäuse 36, dessen Einzelheiten anhand der Figuren 5 bis 7 erläutert sind. Damit ist eine Überwachung der tatsächlichen Spindelstellung möglich, so daß ein nicht ganz geschlossener Schieber oder nicht ganz geöffneter Schieber von außen trotz vollständiger Kapselung erkennbar ist.

Bei dem Ausführungsbeispiel für einen Kugelhahn, das in der Figur 4 dargestellt ist, ist ebenfalls ein Arbeitsmagnet 35 an der Verstellwelle 32 befestigt, der sich allerdings beim Schließen und Öffnen des Kugelhahns auf einer Kreisbahn bewegt. Auf gleicher Höhe ist an der Außenseite des Gehäuses wiederum ein Anzeigegehäuse 36 angebracht, was nachfolgend näher erläutert wird. Auch diese Anzeigevorrichtung erfüllt den Zweck einer Kontrolle der Stellung der Sperrkugel 33 trotz vollständiger Kapselung.

In dem Anzeigegehäuse 36 ist mit Hilfe von Spitzen A und B eine Anzeigetrommel 38 drehbar gelagert, in die ein Anzeigemagnet 37 eingesetzt ist, beispielsweise eingeklebt ist. Damit ist eine Einrichtung geschaffen, die einer frei drehbaren Magnetnadel ähnlich ist. Aus der Figur 6 ist die Polung zu erkennen. Das Gehäuse 36 trägt an sichtbarer Stelle ein Fenster 39, und der äußere Umfang der Anzeigetrommel 38 ist mit Markierungen versehen, beispielsweise mit einem roten und einem grünen Feld, deren Grenzlinien unter einem Winkel von 30° verlaufen. Damit ist von einer Stelle außerhalb des Anzeigegehäuses 36 die Stellung des Anzeigemagneten 37 und damit der Anzeigetrommel 38 zu erkennen.

Der in der Figur 6 dargestellte Arbeitsmagnet 35 sei der in der Figur 4 wiedergegebene Arbeitsmagnet 35, der sich zusammen mit der Stellwelle 32 auf einer Kreisbahn bewegt. In der dargestellten Lage sind die jeweiligen Polachsen der beiden Magnete 35 und 37 zueinander ausgerichtet, es herrscht eine völlig stabile Lage vor. Bei einer Drehung des Arbeitsmagneten in der einen oder anderen Richtung auf den mit den Pfeilen markierten Bahnen wird der Anzeigemagnet 37 entsprechend mitverschwenkt, wobei es gegebenenfalls eine Verstärkungswirkung gibt; der rotatorische Anteil des Anzeigemagnetes wird also in eine noch größere Verdrehung des Anzeigemagneten umgesetzt. In dieser Weise läßt sich die Stellung der Sperrkugel 32 des Kugelhahns sehr gut kontrollieren.

Es wurde bereits erwähnt, daß bei dem Schieber gemäß der Figur 1 der an dem unteren Spindelende befestigte Arbeitsmagnet 35 eine geradlinige Bewegung ausführt. Dieser Arbeitsmagnet 35 ist als Stabmagnet herkömmlicher Prägung ausgebildet, also als Magnet, dessen Pole sich an den schmalen Stirnseiten befinden. In der in Figur 7 dargestellten Lage führt das zu einer entsprechenden Ausrichtung des Anzeigemagneten 37. In der tatsächlichen Einbaulage ist der Arbeitsmagnet 35 weiter von dem Anzeigemagneten 37 abgerückt, was jedoch an der Funktion nichts ändert. Mit zunehmender Entfernung in Richtung des Pfeiles, also bei zunehmender Öffnung des Schiebers kommen sich der Nordpol des Anzeigemagneten 37 und der Südpol des Arbeitsmagneten 35 immer näher, bis sie sich annähernd gegenüberliegen. Bei der weiteren Aufwärtsbewegung des Arbeitsmagneten 35 wird der Anzeigemagnet 37, bezogen auf die dargestellte Ausgangsstellung, annähernd um 160 bis 170° verdreht, wobei im letzten Bereich eine große Spindelbewegung nur noch eine geringe Anzeigemagnetdrehung zur Folge hat. Diese nichtlineare Übersetzung kann in Kauf genommen werden, da zumindest im Bereich der Schließstellung eine sehr genaue Überwachung möglich ist.

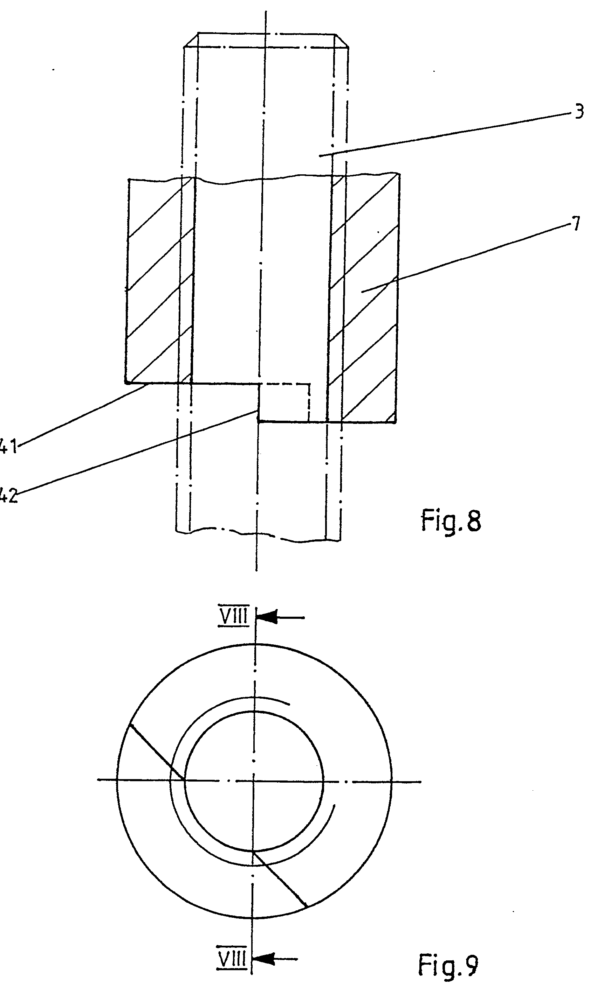

In den Figuren 8 und 9 ist eine Mutter 7 wiedergegeben, die beispielsweise Bestandteil der Gewindehülse 7 bei dem Ausführungsbeispiel gemäß der Figur 1 und mit einer Schälkante 42 versehen ist, die annähernd unter 45° in die Gänge des Spindelgewindes eintaucht. Sie wird durch einen segmentförmigen Ausschnitt 41 hervorgerufen, der beispielsweise durch Fräsen oder Sägen entsteht.

Diese Mutternform wird immer dann eingesetzt, wenn an dem Gewinde der Spindel 3 Ablagerungen zu befürchten sind im Zeitraum zwischen zwei Verstellungen. Die Schälkante 42 sorgt dabei für die weitgehende Entfernung einer Ablagerung auf den Gewindegängen, so daß die Spindelbewegung nicht durch Verklemmen der Spindel-Mutter-Einheit gestört ist. Dies ist insbesondere bei Absperrorganen mit einer Permanentmagnetkupplung wichtig, weil nur ein begrenztes Moment von der Permanentmagnetkupplung übertragen werden kann. Es muß also Vorsorge getroffen werden, daß möglichst keine Drehmomentspitzen beispielsweise durch Verklemmen entstehen, die oberhalb des von der Kupplung übertragbaren Momentes liegen. Bei entsprechendem Bedarf kann auch das andere Mutterende mit einer entsprechenden Schälkante bzw. mit Schälkanten 42 ausgestattet sein. Im übrigen kann jede Schälkante mehrere Gewindegänge umfassen, so daß für ein und dieselbe Stelle beim Einlauf der Spindel in die Mutter zwei Schälkanten 42 wirksam werden.

## Ansprüche

1. Absperrorgan für Gase oder Flüssigkeiten, mit einer den Verschlußkörper tragenden Spindel (3) oder Stellwelle (32), deren axiale Verstellung mit Hilfe einer antreibbaren Mutter (7) bzw. deren Verdrehung zur Schließstellung oder Öffnungsstellung des Verschlußkörpers führt, bei dem die Mutter (7) bzw. die Stellwelle (32) direkt mit einem Innenrotor (13) verbunden ist, um dessen äußere Zylinderfläche Permanentmagnete (20) mit wechselnder Polung angebracht sind, ein an dem Gehäuse (9) befestigter Spalttopf (12, 21) den Innenrotor (13) glockenförmig umgibt und ein zylindrischer, in dem Gehäuse (9) gelagerter Treiber (10) den Spalttopf (12) übergreift, der auf seiner zylindrischen Innenfläche mit Permanentmagneten (20) in der gleichen Anzahl besetzt ist wie der Innenrotor (13), jedoch mit entgegengesetzter Polung, dadurch **gekennzeichnet**, daß außen an dem Gehäuse (9) im Bereich der Spindel (3) bzw. der Stellwelle (32) ein drehbar gelagerter Anzeigemagnet (37) angebracht ist, und daß an der Spindel (3) bzw. an der Stellwelle (32) ein Arbeitsmagnet (35) fest angebracht ist, der infolge der Spindel- bzw. der Stellwellenbewegung geradlinig oder auf einer Kreisbahn relativ zu dem Anzeigemagneten bewegbar ist.

2. Absperrorgan nach Anspruch 1, dadurch **gekennzeichnet**, daß an dem Treiber ein Handrad (14), ein Elektromotor (18) oder ein Umschaltgetriebe mit einem Handrad und einem Elektromotor angeschlossen ist.

3. Absperrorgan nach Anspruch 1 oder 2, dadurch **gekennzeichnet**, daß die Mutter als Gewindebuchse (7) ausgebildet ist.

4. Absperrorgan nach einem der Ansprüche 1 bis 3, dadurch **gekennzeichnet**, daß der Spalttopf (21) aus einem Kunststoff unter Einschluß von Kohlefasern oder Aramidfasern besteht.

5. Absperrorgan nach einem der vorhergehenden Ansprüche, dadurch **gekennzeichnet**, daß der Spalttopf (21) stufenförmig mit mindestens zwei zylindrischen Abschnitten unterschiedlichen Durchmessers ausgebildet ist.

6. Absperrorgan nach Anspruch 5, dadurch **gekennzeichnet**, daß mindestens zwei Kränze von Permanentmagneten (20) an dem Innenrotor (13) und dem Treiber (10) so angebracht sind, daß in jedem zylindrischen Abschnitt dieselben Abstände der sich gegenüber liegenden Permanentmagnete (20) an den Innenrotor (30) und den Treiber (10) vorhanden sind.

7. Absperrorgan nach Anspruch 5 oder 6, dadurch **gekennzeichnet**, daß im Bereich der Stufe zwischen den zylindrischen Abschnitten der Spalttopf (21) einen radialen Steg, einen integrierten Ring (23) oder einen aufgesetzten Ring (24) trägt.

8. Absperrorgan nach einem der vorhergehenden Ansprüche, dadurch **gekennzeichnet**, daß der Anzeigemagnet (37) in einer drehbar gelagerten Anzeigetrommel (38) eingesetzt ist.

9. Absperrorgan nach Anspruch 8, dadurch **gekennzeichnet**, daß der Anzeigemagnet (35) bzw. die Anzeigetrommel (38) innerhalb eines Anzeigegehäuses (36) untergebracht sind.

10. Absperrorgan nach Anspruch 9, dadurch **gekennzeichnet**, daß das Anzeigegehäuse (36) geschlossen ist und vor dem Anzeigemagneten (37) bzw. vor der Anzeigetrommel (38) ein Sichtfenster (39) angeordnet ist.

11. Absperrorgan nach einem der vorhergehenden Ansprüche, dadurch **gekennzeichnet**, daß die Polachse des an der Stellwelle (32) angebrachten Arbeitsmagneten (35) in der dem Anzeigemagneten (37) nächstgelegenen Position koaxial zur Polachse des Anzeigemagneten (37) ausgerichtet ist.

12. Absperrorgan nach einem der Ansprüche 1 bis 10, dadurch **gekennzeichnet**, daß die Polachse des an der Spindel (3) angebrachten Arbeitsmagneten (35) in einer zu dem Anzeigemagneten (37) ausgerichteten Mittelstellung parallel zu dessen Polachse ausgerichtet ist.

13. Absperrorgan nach einem der Ansprüche 1 bis 10 oder nach Anspruch 12, dadurch **gekennzeichnet**, daß die antreibbare Mutter (7) zumindest auf der einen Seite eine Schälkante (42) zur Reinigung der Spindel (3) aufweist.

14. Absperrorgan nach Anspruch 13, dadurch **gekennzeichnet**, daß die Schälkante (42) durch einen segmentförmigen Ausschnitt des Innengewindes gebildet ist.

15. Absperrorgan nach Anspruch 13 oder 14, dadurch **gekennzeichnet**, daß der Ausschnitt (41) mindestens zwei Gewindegänge zur Bildung von zwei Schälkanten (42) umfaßt.

## Claims

1. Barrier for gases or liquids, with a control shaft (32) or a spindle (3) carrying the closure body and whose axial adjustment with the aid of a drivable nut (7) or the rotation thereof leads to the opening or closure of the closure body, in which the nut (7) or the control shaft (32) is directly connected to an inner rotor (13), around whose outer cylindrical face are provided permanent magnets (20) with alternating polarity, a split cover (12, 21) fixed to the casing (9) surrounding in bell-shaped manner the inner rotor (13) and a cylindrical driver (10) mounted in the casing (9) projects over the split cover (12) and which has on its cylindrical inner face the same number of permanent magnets (20) as the inner rotor (13), but with an opposite polarity, characterized in that externally to the casing (9) in the vicinity of the spindle (3) or the control shaft (32) is fitted an indicating magnet (37) mounted in rotary manner and that to the spindle (3) or to the control shaft (32) is fixed a working magnet (35) which, as a result of the spindle or control shaft movement, is movable linearly or on a circular path relative to the indicating magnet.

2. Barrier according to claim 1, characterized in that to the driver is connected a handwheel (14), an electric motor (18), or a switching or reversing gear with a handwheel and an electric motor.

3. Barrier according to claims 1 or 2, characterized in that the nut is constructed as a threaded bush.

4. Barrier according to one of the claims 1 to 3, characterized in that the split cover (21) is made from plastic, accompanied by the inclusion of carbon fibres or aramide fibres.

5. Barrier according to one of the preceding claims, characterized in that the split cover (21) is constructed in stepped manner with at least two cylindrical portions of differing diameter.

6. Barrier according to claim 5, characterized in that at least two rings of permanent magnets (20) are so fitted to the inner rotor (13) and the driver (10) that in each cylindrical portion there are the same spacings of the facing permanent magnets (20) on the inner rotor (30) and the driver (10).

7. Barrier according to claims 5 or 6, characterized in that in the vicinity of the step between the cylindrical portions of the split cover (21) there is a radial web, an integrated ring (23) or a surface mounted ring (24).

8. Barrier according to one of the preceding claims, characterized in that the indicating magnet (37) is inserted in an indicating drum (38) mounted in rotary manner.

9. Barrier according to claim 8, characterized in that the indicating magnet (35) or the indicating drum (38) are housed within an indicating casing (36).

10. Barrier according to claim 9, characterized in that the indicating casing (36) is closed and a viewing window (39) is positioned in front of the indicating magnet (37) or the indicating drum (38).

11. Barrier according to one of the preceding claims, characterized in that the polar axis of the working magnet (35) fitted to the control shaft (32) is oriented coaxially to the polar axis of the indicating magnet (37) in the position closest to the latter.

12. Barrier according to one of the claims 1 to 10, characterized in that the polar axis of the working magnet (35) fitted to the spindle (3) is parallel to the polar axis of the indicating magnet (37) in a central position oriented with respect thereto.

13. Barrier according to one of the claims 1 to 10 or according to claim 12, characterized in that the drivable nut (7) has on at least one side a peeling edge (42) for cleaning the spindle (3).

14. Barrier according to claim 13, characterized in that the peeling edge (42) is formed by a segmental cutout of the inner thread.

15. Barrier according to claims 13 or 14, characterized in that the cutout (41) comprises at least two threads for forming two peeling edges (42).


## Revendications

1. Obturateur pour gaz ou liquides avec une broche (3) ou un arbre de réglage (32) qui porte le corps d'obturation, broche ou arbre dont le déplacement axial à l'aide d'un écrou (7) qui peut être commandé ou dont la rotation entraîne la position de fermeture ou la position d'ouverture du corps d'obturation, dans lequel l'écrou (7) ou l'arbre de réglage (32) est relié directement à un rotor intérieur (13), des aimants permanents (20) à polarité alternée étant disposés autour de la surface extérieure du cylindre de celui-ci, un pot pour fente (12, 21) fixé au bâti (9) entourant le rotor intérieur (13) à la façon d'une cloche et un organe d'entraînement (10) cylindrique, positionné dans le bâti (9) s'agrippant sur le pot pour fente (12) qui est équipé, sur sa face cylindrique intérieure, du même nombre d'aimants permanents (20) que le rotor intérieur (13) mais cependant de polarité opposée, **caractérisé en** ce qu'un aimant indicateur (37) positionné en étant rotatif est fixé à l'extérieur sur le bâti (9) dans la zone de la broche ou de l'arbre de réglage (32) et qu'un aimant de travail (35) est fixé de manière fixe sur la broche (3) ou l'arbre de réglage (32), aimant de travail qui peut se déplacer par rapport à l'aimant indicateur en ligne droite ou sur une trajectoire circulaire par suite du déplacement de la broche ou de l'arbre de réglage.

2. Oburateur selon la revendication 1, **caractérisé en** ce qu'une roue à main (14), un moteur électrique (18) ou un correcteur de rapport avec une roue à main et un moteur électrique est raccordé à l'organe d'entraînement.

3. Obturateur selon la revendication 1 ou 2, **caractérisé en** ce que l'écrou est configuré comme une douille taraudée (7).

4. Obturateur selon l'une des revendications précédentes, **caractérisé en** ce que le pot pour fente (21) est constitué par une matière plastique avec inclusion de fibres de carbone ou de fibres d'aramide.

5. Obturateur selon l'une des revendications précédentes, **caractérisé en** ce que le pot pour fente (21) est configuré à gradins avec au moins deux portions cylindriques de diamètre différent.

6. Obturateur selon la revendication 5, **caractérisé en** ce qu'au moins deux couronnes d'aimants permanents (20) sont fixées sur le rotor intérieur (13) et l'organe d'entraînement (10) de telle manière que l'on a, dans chaque portion cylindrique, les mêmes écarts des aimants permanents (20) qui sont opposés sur le rotor intérieur (30) et l'organe d'entraînement (10).

7. Obturateur selon la revendication 5 ou 6, **caractérisé en** ce que le pot pour fente porte, dans la zone du gradin entre les portions cylindriques, une traverse radiale, un anneau intégré (23) ou un anneau rapporté (24).

8. Obturateur selon l'une des revendications précédentes, **caractérisé en** ce que l'aimant indicateur (37) est placé dans un tambour (38) positionné de manière rotative.

9. Obturateur selon la revendication 8, **caractérisé en** ce que l'aimant indicateur (35) ou le tambour indicateur (38) sont logés à l'intérieur d'un bâti de l'indicateur (36).

10. Obturateur selon la revendication 9, **caractérisé en** ce que le bâti de l'indicateur (36) est fermé et qu'un regard (39) est placé devant l'aimant indicateur (37) ou devant le tambour indicateur (38).

11. Obturateur selon l'une des revendications précédentes, **caractérisé en** ce que l'axe polaire de l'aimant de travail (35) fixé sur l'arbre de réglage (32) est aligné dans la position immédiatement la plus proche de l'aimant indicateur (37) coaxialement par rapport à l'axe polaire de l'aimant indicateur (37).

12. Obturateur selon l'une des revendications 1 à 10, **caractérisé en** ce que l'axe polaire de l'aimant de travail (35) fixé sur la broche (3) est aligné dans une position centrale alignée par rapport à l'aimant indicateur (37) parallèlement à son axe polaire.

13. Obturateur selon l'une des revendications 1 à 10 ou selon la revendication 12, **caractérisé en** ce que l'écrou qui peut être commandé (7) présente au moins sur l'un des côtés une arête d'écroûtage (42) pour nettoyer la broche (3).

14. Obturateur selon la revendication 13, **caractérisé en** ce que l'arête d'écroûtage (42) est formée par une découpure en forme de segment du filet intérieur.

15. Obturateur selon la revendication 13 ou 14, **caractérisé en** ce que la découpure (41) comprend au moins deux spires pour former deux arête d'écroûtage (42).

Fig. 1

Fig. 2

Fig. 3

Fig. 4

36

A

37

B

38

Fig. 5

N

S

35

36

N

37

S

38

39

Fig. 6

N

35

36

S

37

N

38

39

S

Fig. 7

3

7

41

42

Fig. 8

VIII

VIII

Fig. 9

13